**Europäisches Patentamt**

**European Patent Office**

**Office européen des brevets**

(19)

(11) Veröffentlichungsnummer : **0 152 008 B2**

(12) # NEUE EUROPÄISCHE PATENTSCHRIFT

(45) Veröffentlichungstag der neuen Patentschrift :
28.10.92 Patentblatt 92/44

(51) Int. Cl.$^5$ : **C04B 2/06,** C04B 28/02,
// (C04B28/02, 22:06)

(21) Anmeldenummer : **85100878.9**

(22) Anmeldetag : **29.01.85**

(54) **Verfahren zum Beeinflussen der Löschgeschwindigkeit von Branntkalken und dessen Verwendung.**

(30) Priorität : 04.02.84 DE 3403867
22.10.84 DE 3438620

(43) Veröffentlichungstag der Anmeldung :
21.08.85 Patentblatt 85/34

(45) Bekanntmachung des Hinweises auf die
Patenterteilung :
01.04.87 Patentblatt 87/14

(45) Bekanntmachung des Hinweises auf die
Entscheidung über den Einspruch :
28.10.92 Patentblatt 92/44

(84) Benannte Vertragsstaaten :
AT BE CH DE FR GB IT LI LU NL SE

(56) Entgegenhaltungen :
DE-A- 2 642 860
GB-A- 2 033 367
CHEMICAL ABSTRACTS, Band 97, Nr. 16, Oktober 1982, Seite 146, Nr. 129986h, Columbus,
Ohio, US
CHEMICAL ABSTRACTS, Band 80, Nr. 20, 20.
Mai 1974, Seite 238, Nr. 111970p, Columbus,
Ohio, US

(56) Entgegenhaltungen :
CERAMIC ABSTRACTS, 1. August 1956, Seite
159, linke Spalte, Abschnitt g-h, The American
Ceramic Society Inc., Columbus, Ohio,US; V.V.
KONSTANTINOV: "Influence of salt solutions
on rate of slaking of ground quicklime"
CHEMICAL ABSTRACTS, Band 83, Nr. 24, 15.
Dezember 1975, Seite 169, Nr. 195908w, Columbus, Ohio, US
Zement, Kalk, Gips. 1955. s. 393-397
Baustoffindustrie, 1975-A-2. s. 12-15
Bericht des Bundesverbandes der Deutschen
Kalkindustrie e.V. 5/75 vom 3.2.75 und 5a/75
vom 17.10.75.

(73) Patentinhaber : SICOWA Verfahrenstechnik
für Baustoffe GmbH & Co. KG
Handerweg 17
W-5100 Aachen (DE)

(72) Erfinder : Koslowski, Thomas, Dr.
Dipl.-Mineraloge
Buschmühle 1
W-5100 Aachen (DE)

(74) Vertreter : Sparing Röhl Henseler
Patentanwälte European Patent Attorneys
Rethelstrasse 123
W-4000 Düsseldorf 1 (DE)

EP 0 152 008 B2

## Beschreibung

Die Erfindung betrifft ein Verfahren zum Beeinflussen der Löschgeschwindigkeit von Branntkalken unter Verwendung von Calciumsulfat als Verzögerer bzw. unter Verwendung eines Beschleunigers sowie die Verwendung dieses Verfahrens.

In Abhängigkeit vom Brennen liegt Branntkalk als Weich-, Mittel- oder Hartbrannt vor, wobei sich beim Weichbrannt aufgrund der grossen Oberfläche beim Löschen schnell eine hohe Temperaturentwicklung infolge des schnellen Freisetzens der Löschwärme ergibt. Das Reaktionsintervall wird zum Hartbrannt hin wesentlich breiter, die erzielbare Temperatur geringer, da die Reaktivität, im wesentlichen die spezifische Oberfläche, abnimmt.

Für veschiedene Anwendungszwecke kann die Ausnutzung der Löschwärme und/oder des mit dem Löschen verbundenen Wasserentzugs vorteilhaft sein. Störend kann hierbei jedoch sein, dass die Löschreaktion sofort und insbesondere beim Weichbrannt aufgrund des schmalen Reaktionsintervalls heftig einsetzt, wenn der gebrannte Kalk mit Wasser in Berührung gelangt.

Aus der DE-A-2 642 860 ist es bekannt, die Löschgeschwindigkeit von Branntkalk dadurch zu verzögern, dass dem Branntkalk bereits bei dessen Vermahlung Gips zugegeben wird und zusätzlich schwerlösliche Salze der Phosphor-, Oxal-, Salpeteroder Kohlensäure verwendet werden. Die hierbei erzielte Verzögerung liegt aber nur in der Grössenordnung von wenigen Minuten, wobei im wesentlichen nur die Steilheit der Löschcharakteristik verringert und zugleich eine geringere Endtemperatur im Vergleich zu Kalk ohne Zusatz erhalten wird. Dies ist beispielsweise bei Verwendung in Rohmischungen, die eine grössere Haltezeit bis zu ihrer Verarbeitung aufweisen müssen, ungeeignet.

Ferner ist es aus CERAMIC ABSTRACTS, 1. August 1956, S. 159 bekannt, dass das Löschen von Branntkalk durch Chloridlösungen beschleunigt und durch eine Lösung aus Sulfaten und Carbonaten verzögert wird.

Ebenso ist es aus CHEMICAL ABSTRACTS, Vol. 83, Nr. 83, 15. Dez. 1975, S. 169 bekannt, dass bereits geringe Mengen an Sulfationen das Löschen von Branntkalk beeinträchtigen, weshalb Massnahmen zum Inaktivieren der Sulfationen vorgesehen werden.

Der Zusatz von Sulfationen flacht die Löschcharakteristik ab und führt zu einer erniedrigten Endtemperatur, wobei eine Verzögerung in der Grössenordnung von 10 min erhalten werden kann.

Aufgabe der Erfindung ist es, ein Verfahren der eingangs genannten Art zu schaffen, das es ermöglicht, die Löschcharakteristik und die erzielbare Maximaltemperatur gesteuert zu beeinflussen sowie die Löschreaktion über längere Zeiträume hinweg gesteuert zu verzögern.

Diese Aufgabe wird dadurch gelöst, dass neben dem Calciumsulfat eine die heterogene Keimbildung und das Kristallwachstum von Kalkhydrat hemmende organische Substanz verwendet wird, wobei das Calciumsulfat und die organische Substanz zunächst in Wasser gelöst und dann der Branntkalk zugegeben wird.

Als organische Substanz eignen sich vorzugsweise Oxycarbonsaüre wie Zitronen-, Wein- und Glukonsäure , die auch in Mischung verwendet werden können, aber auch deren genügend lösliche Salze, etwa die Ca-, Na- oder Mg-Salze, soweit sie entsprechend löslich sind und soweit bei Alkalisalzen Alkaliverträglichkeit in dem System, in dem das Verfahren angewendet wird, vorliegt.

Als Calciumsulfat eignet sich insbesondere Calciumsulfathalbhydrat, vorzugsweise Stuckgips.

Calciumsulfat wird vorzugsweise in einer Menge von 0,15 bis 6 Gew.-% und Oxycarbonsäure in einer Menge von 0,03 bis 1,5 Gew.-% verwendet.

Gemäss H. Gundlach, Dampfgehärtete Baustoffe, Bauverlag GmbH, Wiesbaden und Berlin, 1973, wird angenommen, dass die Hydratation von Weissfeinkalk mit hoher Wahrscheinlichkeit über die Löungsphase verläuft. Dann könnte die Verzögerungswirkung von Calciumsulfat durch die Beeinflussung der Diffusionsgeschwindigkeit von $H_2O$ in das anhydrische CaO-Korn erklärt werden, wobei aufgrund dessen, dass das Calciumsulfat bereits gelöst ist, wenn der Branntkalk zugegeben wird, dieses optimal wirksam wird.

Bei den organischen Substanzen in Form der Oxycarbonsäuren, und iher Salze handel es sich um oberflächenaktive Stoffe, die vermutlich durch Behinderung der heterogenen Keimbildung infolge von Oberflächenbelegung reaktiver Keimzentren, Reduzierung der Keimbildungshäufigkeit und der -geschwindigkeit sowie durch Beeinflussung der Kristallwachstums des sich bildenden Kalkhydrates infolge Adsorption nahezu monomolekularer Schichten insbesondere von Ca-Salzen der Oxycarbonsäure an den Kristalloberflächen und nachfolgender Waschstumsbehinderung verzögernd wirken.

Die Kombination beider Verzögerunsmechanismus führt überraschenderweise dazu, dass die Löschcharakteristik gesteuert und insbesondere steiler gemacht werden kann, wobei sich erhöhte Maximaltemperaturen sowie sehr lange Verzögerungszeiten einstellen lassen.

Zweckmäßig ist ferner, als Beschleuniger ein mit Kalk reaktionsfähiges Aluminat insbesondere Tonerdezement, oder Aluminiumsulfat, und/oder eine beschleunigende Oxycarbonsäure, insbesondere Apfel- und/oder Fumarsäure, oder deren Salze, verwendet werden, wobei der Beschleuniger zunächst in Wasser gelöst und dann der Branntkalk zugegeben wird.

Die Verwendung eines Beschleunigers und insbesondere der aufgeführten Beschleuniger ist im Zusammenhang mit der Verzögerung der Löschgeschwindigkeit vorteilhaft anwendbar, da hierdurch höhere Maximaltemperaturen verbunden mit einer entsprechenden Steiheit der Löschcharakteristik erreichbar sind, ohne dass die Verzögerung wesentlich zu kürzeren Zeiten hin verschoben wird. Alleine verwendet ergibt sich neben der Beschleunigung ebenfalls eine Erhöhung der Maximaltemperatur.

Tonerdezement wird vorzugsweise in einer Menge von 1 bis 5 Gew.-% und Oxycarbonsäure in einer Menge von 0,03 bis 1,5 Gew.-% verwendet.

Gegenstand der Erfindung ist weiterhin die Verwendung des Verfahrens zum zeitlich gesteuerten Aktivieren eines durch erhöhte Temperatur auslösbaren Bindemittels in einer Rohmischung aus dem Bindemittel, Füllstoffen, Wasser und gegebenenfalls Schaum, wobei die giessfähige Rohmischung mit der den Branntkalk, die Verzögerer und gegebenenfalls Beschleuniger enthaltenden wässrigen Aufschlämmung gemischt wird.

Hierbei ist das Bindemittel insbesondere ein Zement, der mittels eines Verzögerers und eines Beschleunigers so eingestellt ist, dass durch erhöhte Temperatur, vorzugsweise höher als 45°C, festigkeitsbildende Reaktionen des Zement ausgelöst werden.

Die Konzentrationen der organischen Verbindung ist im übrigen abhängig von der Gesamtoberfläche etwa einer Mischung, in der der Branntkalk verwendet wird.

Weitere Ausgestaltungen der Erfindung sind der nachfolgenden Beschreibung zu entnehmen.

Die Erfindung wird nachstehend anhand der beigefügten Abbildungen näher erläutert, in denen Versuchsergebnisse, die nach DIN 1060, Teil 3, erhalten wurden, dargestellt sind.

Fig. 1 zeigt ein Temperatur-Zeit-Diagramm bezüglich des Einflusses von Calciumsulfat auf die Hydratation von Weissfeinkalk.

Fig. 2 zeigt ein Temperatur-Zeit-Diagramm bezüglich des Einflusses von Zitronensäure auf die Hydratation von Weissfeinkalk.

Fig. 3 zeigt ein Temperatur-Zeit-Diagramm bezüglich des Einflusses verschiedenen Säuren auf die Hydratation von Weissfeinkalk.

Fig. 4 zeigt ein Temperatur-Zeit-Diagramm bezüglich des Einflusses von Calciumsulfat und Zitronensäure auf die Hydratation von Weissfeinkalk.

Fig. 5 zeigt ein Temperatur-Zeit-Diagramm bezüglich des Einflusses von Zusätzen mit verzögernder und beschleunigender Wirkung auf die Hydratation von Weissfeinkalk.

Die Starttemperatur der jeweiligen Mischung für die in den Diagrammen dargestellten Versuchsergebnisse betrug konstant 20°C ± 1 °C. Zusätze bzw. Zusatzkombinationen wurden jeweils dem Anmachwasser zugemischt und eine Minute verrührt, erst dann wurde Weissfeinkalk zugesetzt.

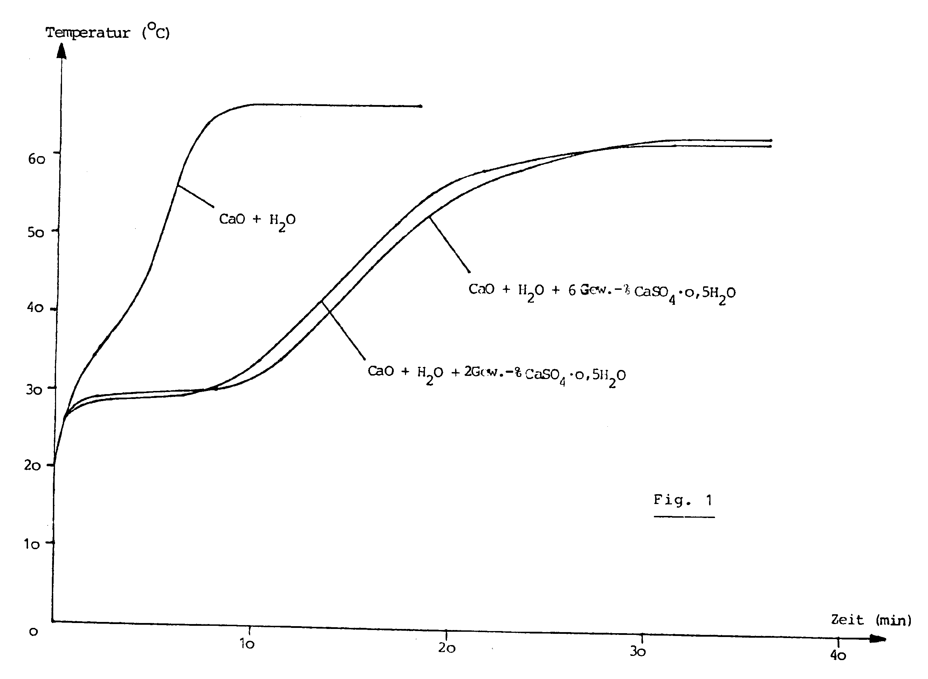

Aus Fig. 1 ergibt sich, dass dann, wenn eine gesättigte Lösung aus Calciumsulfat ($CaSO_4 \cdot 1/2H_2O$) hergestellt und dann Weissfeinkalk (CaO) zugesetzt wird, die Hydratation im Vergleich zum Löschen des Kalks ohne Anwsesenheit des Sulfates erst nach wenigstens 8 min im wesentlichen beginnt und die Maximaltemperatur erst nach etwa einer halben Stunde erreicht wird. Für Zusätze von 0 bis 2 Mol-% Sulfat können variable Ablöschzeiten erhalten werden, während höhere Zusatzmengen keinen zusätzlichen Effekt mehr zeigen. Neben der Verzögerungswirkung kann eine Absenkung der maximalen Hydratationstemperatur um bis zu 5°C festgestellt werden.

Eine möglichst hohe Konzentration des Sulfats im Anmachwasser ist vorteilhaft, um eine maximale Verzögerungswirkung zu erzielen. Deshalb ist die Verzögerungswirkung von Calciumsulfathalbhydrat gut, jedoch diejenige von Calciumsulfatdihydrat oder -anhydrit bei gleicher Einsatzmenge mässig, da deren Löslichkeit schlechter bzw. deren Lösgeschwindigkeit geringer ist.

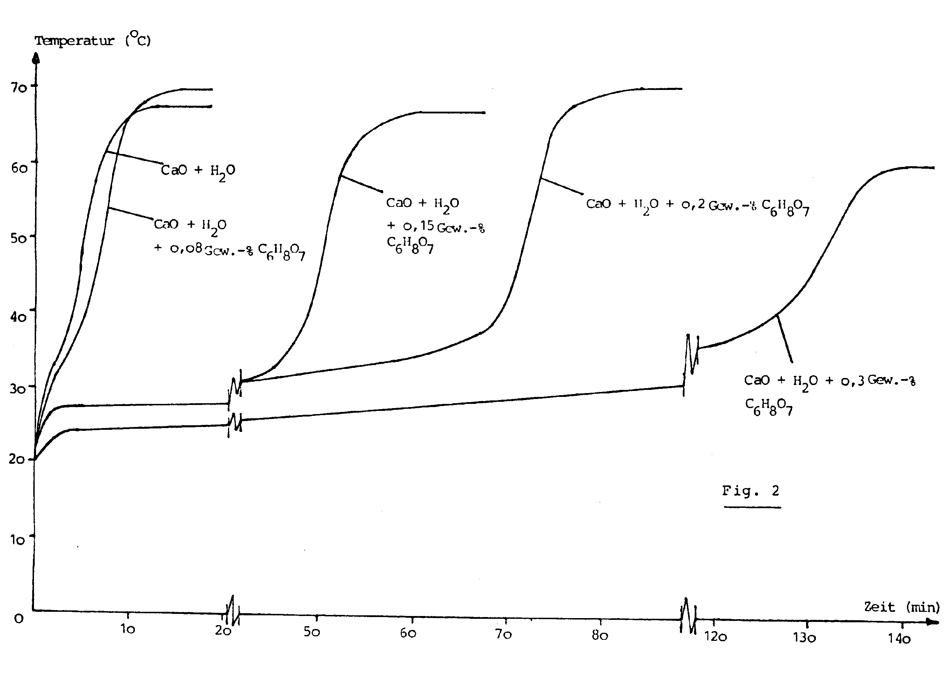

Aus Fig. 2 ergibt sich, dass mittels Zitronensäurezusatz zum Anmachwasser und anschliessender Zugabe des Weissfeinkalks Verzögerungszeiten in einem sehr weiten Intervall von bis zu 2 h erhalten werden können, wobei der Verlauf der Hydratation nach der fast reaktionsfreien Verzögerung nahezu demjenigen der Nullprobe (kein Zusatz) entspricht. Hierbei können höhere Maximaltemperaturen als bei der Nullprobe erhalten werden.

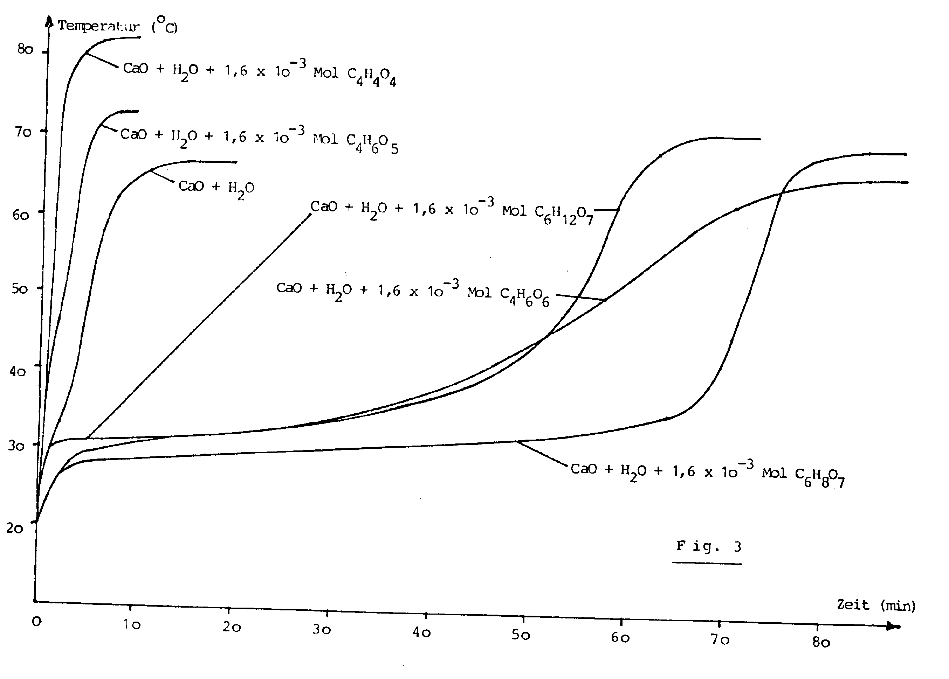

Wie sich aus Fig. 3 ergibt, erhält man durch Verwendung von $1,6 \cdot 10^{-3}$ Mol Glukon-, Wein- oder Zitronensäure unterschiedliche Verzögerungen, jedoch im wesentlichen in der gleichen Grössenordnung von etwa 1 h, wobei die Hydratationsverläufe bei Glukon- und Weinsäure flacher als bei Zitronensäure sind. Dies gilt insbesondere für Weinsäure, die sich zudem dazu eignet, einen Mittel- oder Hartbrannt zu simulieren, ohne dass das Problem der unreagierten Restkörner aufgrund der gröberen Körnung von Mittel- oder Hartbrannt im Vergleich zu Weichbrannt auftritt. Die Maximaltemperatur liegt jeweils höher als bei der Nullprobe.

Ausserdem ergibt sich aus Fig. 3, dass Fumar- und Apfelsäure die Hydratation beschleunigen und die Maximaltemperatur heraufsetzen.

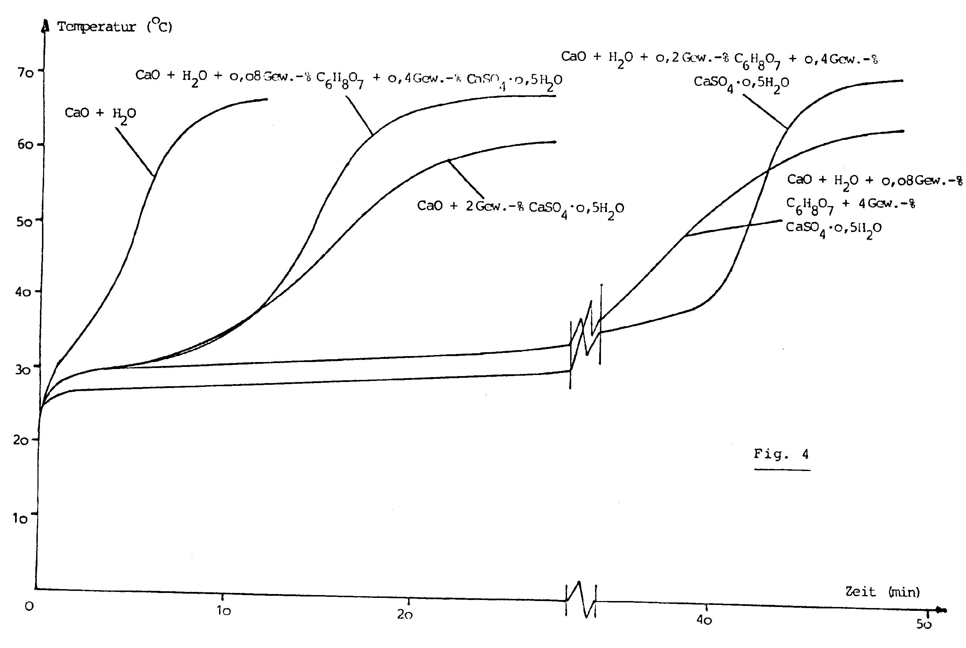

Wie sich aus Fig. 4 ergibt, lässt sich durch geeignete Kombination von Oxycarbonsäuren mit Sulfat, insbesondere Calciumsulfathalbhydrat, neben einer Verschiebung der Hydratation auch die Hydratationscharakteristik beeinflussen. Der Sulfatzusatz bewirkt hier stets eine Erniedrigung der maximalen Hydratationstemperatur. Um letzteres zu kompensieren, kann eine dritte Komponente in Form eines Beschleunigers zugesetzt werden. Hierzu eignet sich beispielsweise Tonerdezement oder die oben erwähnten Fumar- und/oder Apfelsäuren.

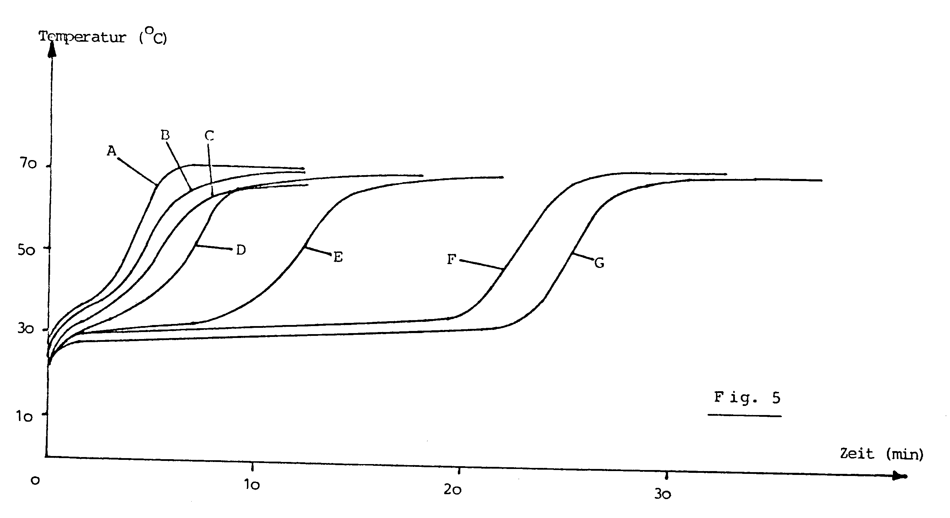

Gemäss Fig. 5 ergibt sich, dass bei Kombination von Calciumsulfathalbhydrat, Zitronensäure und Tonerdezement sowohl die Steilheit der Hydratationscharakteristik als auch die Maximaltemperatur erhöht werden können. Hierbei wurden die Zusatzmengen derart gewählt, dass sich stets etwa die gleiche Maximaltemperatur bei variabler Verzögerungszeit ergibt.

Kurve A $\hat{=}$ CaO + H$_2$O + 2 Gew.-% Tonerdezement

Kurve B $\hat{=}$ CaO + H$_2$O + 1 Gew.-% Zu1

Kurve C $\hat{=}$ CaO + H$_2$O (Nullkurve)

Kurve D $\hat{=}$ CaO + H$_2$O + 2 Gew.-% Zu1

Kurve E $\hat{=}$ CaO + H$_2$O + 4 Gew.-% Zu2

Kurve F $\hat{=}$ CaO + H$_2$O + 8 Gew.-% Zu1

Kurve G $\hat{=}$ CaO + H$_2$O + 4 Gew.-% Zu1

Zu1 ist 85% Tonerdezement, 8,9% CaSO$_4$ · 1/2H$_2$O, 2,7% C$_6$H$_8$O$_7$ · H$_2$O.

Zu2 ist 88 % Tonerdezement, 10% CaSO$_4$ · 1/2H$_2$O, 2% C$_6$H$_8$O$_7$ · H$_2$O.

Erst nach einer vorbestimmten Zeit, die durch die Wahl der Mengen an zugesetzten Substanzen eingestellt und in einem Bereich bis zu über 1 h liegen kann, beginnt die Löschreaktion plötzlich und erfolgt sehr schnell. Das Reaktionsintervall kann verkürzt werden, so dass sich zeitlich verschoben eine starke Temperaturentwicklung ergibt, wobei ausserdem die Temperatur höher sein kann als beim sofortigen Ablöschen des Branntkalks ohne Verzögerer. Hierdurch lässt sich insbesondere auch Weichbrannt mit extrem hoher Mahlfeinheit und damit entsprechend grosser Reaktivität und sehr schmalem Reaktionsintervall verzögern.

Die Verzögerung der Löschreaktion des Kalkes lässt sich beispielsweise in Anwesenheit von Füllstoffen wie Sand, Flugasche o.dgl. und etwa bei der Herstellung von Putzen, Mörteln, Kalk-Zement-Estrichen und Baustoffen wie Schaum- oder Gasbeton, Kalksilikatsteinen oder -formkörpern u.dgl. verwenden und führt zu einer besseren zeitlichen Konzentration der Löschreaktion, wobei sich insbesondere auch die grosse Dispersität von Weichbrannt zum Erhalten eines sehr gleichmässigen Gefüges ausnutzen lässt, da der Branntkalk, da er zunächst verzögert wird, infolge des dadurch möglichen guten Untermischens sehr gleichmässig in einer Rohmischung verteilt werden kann, bevor die Löschreaktion einsetzt.

Über die Löschwärme kann beispielsweise ein Tonerdezement, etwa in Mischung mit einem Portlandzement, in Gang gesetzt und beschleunigt werden, um dessen Erstarrung herbeizuführen, wobei der Tonerdezement zusammen mit Anhydrit und wasserhaltigem Calciumsulfat derart verwendet wird, dass im wesentlichen gelförmiger Ettringit durch die Wärmeeinwirkung infolge der Löschreaktion umkristallisiert und Monophasen gebildet werden. Der Tonerdezement kann aber auch zusammen mit einer Oxycarbonsäure wie Zitronen-, Wein- oder Apfelsäure als das Wachstum von Calciumaluminiumsulfathydrat hemmende Substanz und Calciumsulfat, in kalkhydratfreier Umgebung gemischt, verwendet werden, wobei die Löschwärme des Branntkalks etwa ab 45°C die Erstarrung in Gang setzt. Stattdessen kann auch ein entsprechend mittels Verzögerern und Beschleunigen temperaturabhängig eingestellter anderer Zement wie Portlandzement verwendet werden, dessen Erstarrung durch die Löschwärme in Gang gesetzt wird. Die lässt sich insbesondere zur Herstellung von Rohlingen verwenden, die auf diese Weise in einer Form gesteuert schnellerhärtet werden können, so dass sie innerhalb sehr kurzer Zeit in der Grössenordnung von etwa 1 min eine genügende Festigkeit aufweisen, um entschalt und transportiert werden zu können. Bei der Herstellung von Kalksilikatprodukten, bei denen Quarzsand oder -mehl als Füllstoff gegebenenfalls zusammen mit Schaum verwendet wird, dient dann der beigefügte Kalk als Bindemittel, das beim Autoklavieren mit der Kieselsäure unter Bildung von Calciumhydrosilikaten, z.B. Tobermorit, Gyrolit, Xonotlit usw. reagieren kann.

Auch für Systeme, bei denen ein Austrocknen vorgenommen werden muss, ist das Verfahren verwendbar, falls die Anwesenheit von Kalk nicht stört, da dann durch die Hydratation des Kalks die zum Austrocknen benötigte Wärme geliefert und gleich zeitig Wasser chemisch gebunden werden kann, wobei sich die Hydratation und die Temperaturentwicklung entsprechend steuern lassen.

## Patentansprüche

1. Verfahren zum Beeinflussen der Löschgeschwindigkeit von Branntkalken unter Verwendung von Calciumsulfat als Verzögerer, dadurch gekennzeichnet, dass neben dem Calciumsulfat eine die heterogene Keimbildung und das Kristallwachstum von Kalkhydrat hemmende organische Substanz verwendet wird, wobei das Calciumsulfat und die organische Substanz zunächst in Wasser gelöst und dann der Branntkalk zugegeben wird.

2. Verfahren nach Anspruch 1, dadurch gekennzeichnet, dass als Calciumsulfat Calciumsulfathalbhydrat, insbesondere Stuckgips, verwendet wird.

3. Verfahren nach Anspruch 1 oder 2, dadurch gekennzeichnet, dass als organische Substanz eine Oxycarbonsäure, insbesondere Zitronen-, Wein- und/oder Glukonsäure, oder deren Salze verwendet wird.

4. Verfahren nach einem der Ansprüche 1 bis 3, dadurch gekennzeichnet, dass Calciumsulfat in einer Menge von 0, 15 bis 6 Gew.-% und Oxycarbonsäure in einer Menge von 0,03 bis 1,5 Gew.-

% verwendet werden.

5. Verfahren nach einem der Ansprüche 1 bis 4, dadurch gekennzeichnet, dass zusätzlich ein Beschleuniger verwendet wird, der zusammen mit dem Calciumsulfat und der organischen Substanz zunächst in Wasser gelöst wird.

6. Verfahren nach einem der Ansprüche 1 bis 5, dadurch gekennzeichnet, daß als Beschleuniger ein mit Kalk reaktionsfähiges Aluminat, insbesondere Tonerdezement oder Aluminiumsulfat, und/oder eine beschleunigende Oxycarbonsäure, insbesondere Apfel- und/oder Fumarsäure oder deren Salze verwendet werden, wobei der Beschleuniger zunächst in Wasser gelöst und dann der Branntkalk zugegeben wird.

7. Verfahren nach Anspruch 6, dadurch gekennzeichnet, dass Tonerdezement in einer Menge von 1 bis 5 Gew.-% verwendet wird.

8. Verfahren nach Anspruch 6 oder 7, dass Oxycarbonsäure in einer Menge von 0,03 bis 1,5 Gew.-% verwendet wird.

9. Verwendung des Verfahrens nach einem der Ansprüche 1 bis 8 zum zeitlich gesteuerten Aktivieren eines durch erhöhte Temperatur auslösbaren Bindemittels in einer Rohmischung aus dem Bindemittel, Füllstoffen, Wasser und gegebenenfalls Schaum, wobei die giessfähige Rohmischung mit der den Branntkalk, die Verzögerer und gegebenenfalls Beschleuniger enthaltenden wässrigen Aufschlämmung gemischt wird.

10. Verwendung nach Anspruch 9, dadurch gekennzeichnet, dass das Bindemittel ein Zement ist, der mittels eines Verzögerers und eines Beschleunigers so eingestellt ist, dass durch erhöhte Temperatur, vorzugsweise höher als 45°C, festigkeitsbildende Reaktionen des Zements ausgelöst werden.

## Claims

1. Method of influencing the slaking speed of quick lime by use of Calcium sulphate as retarder, characterised in that with the Calcium sulphate a retarding organic substance of the heterogene growth structure and the crystal growth of hydrated lime is used, wherein the Calcium sulphate and the organic substance, which is initially dissolved in water, and then the quick lime is added.

2. Method according to claim 1, characterised in that semi-hydrated Calcium sulphate, especially plaster of Paris, is used as Calcium sulphate.

3. Method according to claim 1 or 2, characterised in that an hydroxycarboxylic acid, especially citric, tartaric and/or gluconic acid, or the salts thereof, is used as the organic substance.

4. Method according to one of claims 1 to 3, characterised in that Calcium sulphate in an amount from 0.15 to 6 weight % and hydroxycarboxylic acid in an amount from 0.03 to 1.5 weight % are used.

5. Method according to one of claims 1 - 4, characterised in that an accelerator is used in addition, which together with the Calcium sulphate and the organic substance is initially dissolved in water.

6. Method according to one of claims 1 to 5, characterised in that an aluminate capable of reacting with lime, especially alumina cement or aluminium sulphate, and/or an accelerating hydroxycarboxylic acid, especially malic and/or fumaric acid, or the salts thereof are used as accelerator, the accelerator initially being dissolved in water and then the quicklime added.

7. Method according to claim 6, characterised in that alumina cement in an amount from 1 to 5 weight % is used.

8. Method according to claim 6 or 7, in that hydroxycarboxylic acid is used in an amount from 0.03 to 1.5 weight %.

9. Use of the method according to one of claims 1 to 8 for controlling in time the activation, by increased temperature, of a releasable binding medium in a raw mixture of the binding medium, filler, water and if necessary foam, wherein the pourable mixture is mixed with the watery paste containing the quick lime, the retarder and if necessary, accelerator.

10. Use according to claim 9, characterised in that the binding medium is a cement, which is adjusted by means of a retarder and an accelerator so that by increased temperature, preferably higher than 45°C, stress inducing reactions of the cement are set off.

## Revendications

1. Procédé permettant d'agir sur la vitesse d'extinction des chaux calcinées avec utilisation de sulfate de calcium en tant qu'agent retardateur, caractérisé par le fait que, indépendamment du sulfate de calcium, on utilise une substance organique qui inhibe la formation hétérogène de germes et la croissance cristalline de l'hydrate de calcium, le sulfate de calcium et la substance organique étant d'abord dissous dans de l'eau puis apportés à la chaux calcinée.

2. Procédé selon la revendication 1, caractérisé par le fait que le sulfate de calcium utilisé est un plâtre demi-cuit de sulfate de calcium, et plus particulièrement de la fleur de plâtre.

3. Procédé selon l'une des revendications 1 ou 2, caractérisé par le fait que la substance organique utilisée est un acide oxycarbonique, et plus particulièrement un acide citrique, tartrique et/ou gluconique, ou encore les sels de ces acides.

4. Procédé selon l'une des revendications 1 à 3, caractérisé par le fait que le sulfate de calcium est utilisé dans la proportion de 0,15 à 6% en poids, et l'acide oxycarbonique est utilisé dans la proportion de 0,03 à 1,5% en poids.

5. Procédé selon l'une des revendications 1 à 4, caractérisé par le fait que l'on utilise également un accélérateur, lequel est tout d'abord dissous dans l'eau avec le sulfate de calcium et la substance organique.

6. Procédé selon l'une des revendications 1 à 5, caractérisé par le fait que l'accélérateur utilisé est un aluminate réagissant avec la chaux, plus particulièrement : ciment alumineux fondu ou sulfate d'aluminium et/ou un acide oxycarbonique accélérateur, plus spécialement acide malique et/ou acide fumarique, ou encore les sels de ces acides, l'accélérateur étant tout d'abord dissous dans de l'eau puis apporté à la chaux calcinée.

7. Procédé selon la revendication 6, caractérisé par le fait que le ciment alumineux fondu est utilisé à raison de 1 à 5% en poids.

8. Procédé selon la revendication 6 ou 7, caractérisé par le fait que l'acide oxycarbonique est utilisé à raison de 0,03 à 1,5% en poids.

9. Utilisation du procédé selon l'une des revendications 1 à 8 pour l'activation contrôlée dans le temps d'un liant pouvant être dissous par élévation de la trempérature dans un mélange brut composé du liant lui-même, d'une charge, d'eau, et éventuellement de mousse, le mélange brut pouvant être coulé et étant mélangé à la suspension aqueuse qui contient la chaux calcinée, le retardateur et éventuellement l'accélérateur.

10. Utilisation selon la revendication 9, caractérisée par le fait que le liant est un ciment qui est réglé de telle sorte, au moyen d'un retardateur et d'un accélérateur, que les réactions tendant à la solidification du ciment sont déclenchées par élévation de la température, de préférence au delà de 45°C.

Fig. 1

EP 0 152 008 B2

Fig. 2

EP 0 152 008 B2

Fig. 3

Temperatur (°C)

CaO + H$_2$O

CaO + H$_2$O + o,o8 Gew.-% C$_6$H$_8$O$_7$ + o,4 Gew.-% CaSO$_4$·o,5H$_2$O

CaO + H$_2$O + o,2 Gew.-% C$_6$H$_8$O$_7$ + o,4 Gew.-% CaSO$_4$·o,5H$_2$O

CaO + 2 Gew.-% CaSO$_4$·o,5H$_2$O

CaO + H$_2$O + o,o8 Gew.-% C$_6$H$_8$O$_7$ + 4 Gew.-% CaSO$_4$·o,5H$_2$O

Zeit (min)

Fig. 4

EP 0 152 008 B2

Fig. 5